# EUROPEAN PATENT SPECIFICATION

(11) **EP 4 447 361 B1**
(45) Date of publication and mention of the grant of the patent: **21.01.2026**
(21) Application number: 21966628.6
(22) Date of filing: 06.12.2021
(51) Int. Cl.: H04W 24/10, H04W 84/12

(54) **COMMUNICATION METHOD AND COMMUNICATION APPARATUS**
KOMMUNIKATIONSVERFAHREN UND KOMMUNIKATIONSVORRICHTUNG
PROCÉDÉ DE COMMUNICATION ET APPAREIL DE COMMUNICATION

(43) Date of publication of application: 16.10.2024
(73) Proprietor: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2021/135850
(87) International publication number: WO 2023/102700

(56) References cited:
- CN-A- 112 350 809
- CN-A- 113 115 341
- US-A1- 2020 359 248
- US-A1- 2020 359 248
- MENGSHI HU (HUAWEI): "Aggregation in Sensing Measurement Instance", vol. 802.11bf, 29 November 2021 (2021-11-29), pages 1 - 9, XP068198323, Retrieved from the Internet <URL:https://mentor.ieee.org/802.11/dcn/21/11-21-1932-00-00bf-aggregation-in-sensing-measurement-instance.pptx> [retrieved on 20211129]
- CLAUDIO DA SILVA (META PLATFORMS ET AL: "Specification Framework for TGbf", vol. 802.11bf, no. 4, 30 November 2021 (2021-11-30), pages 1 - 11, XP068198351, Retrieved from the Internet <URL:https://mentor.ieee.org/802.11/dcn/21/11-21-0504-04-00bf-specification-framework-for-tgbf.docx> [retrieved on 20211130]
- RUI DU (HUAWEI): "Definitions and scenarios of the WLAN sensing", vol. 802.11bf, 11 January 2021 (2021-01-11), pages 1 - 20, XP068175714, Retrieved from the Internet <URL:https://mentor.ieee.org/802.11/dcn/21/11-21-0035-00-00bf-definitions-and-scenarios-of-the-wlan-sensing.pptx> [retrieved on 20210111]
- XIAOMI COMMUNICATIONS: "Wireless sensing in NR", 3GPP DRAFT; RP-213176, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. Electronic Meeting; 20211206 - 20211217, 29 November 2021 (2021-11-29), Mobile Competence Centre ; 650, route des Lucioles ; F-06921 Sophia-Antipolis Cedex ; France, XP052097293

## Description

### TECHNICAL FIELD

The present disclosure relates to the field of wireless communications and, more specifically, to a communication method and a communication apparatus applicable to wireless local area network sensing.

### BACKGROUND

The wireless local area network (WLAN) has the characteristics of flexibility, mobility, and low cost. With the development of communication technologies and the growth of user requirements, research on the application of the WLAN is being gradually deepened. For example, WLAN sensing is currently researched, and the main application scenarios of the WLAN sensing are location discovery in dense environments (home and enterprise environments), proximity detection and presence detection, etc. WLAN technologies are known from: MENGSHI HU (HUAWEI): "Aggregation in Sensing Measurement Instance", IEEE 802.11-21 /1932r0, 29 November 2021, XP068198323; US2020/359248A1; and CLAUDIO DA SILVA (META PLATFORMS ET AL: "Specification Framework for TGbf', IEEE 802.11-21 /0504r4, 30 November 2021, XP068198351.

### SUMMARY

Various embodiments of the present disclosure provide technical solutions as follows.

According to one aspect, a communication method is provided as defined by claim 1.

According to another aspect, a communication method is provided as defined by claim 6.

According to another aspect, a sensing initiator is provided as defined by claim 10,

According to another aspect, a sensing responder is provided as defined by claim 11.

According to another aspect, a non-transitory computer-readable storage medium is provided as defined by claim 12.

According to another aspect, a non-transitory computer-readable storage medium is provided as defined by claim 13.

The technical solutions provided by the embodiments of the present disclosure can trigger the sending of a measurement report frame including a plurality of measurement results, which saves resource overhead.

### BRIEF DESCRIPTION OF THE DRAWINGS

The above and other features of the embodiments of the present disclosure will become more apparent by describing in detail the exemplary embodiments of the present disclosure with reference to the accompanying drawings, in the drawings:
FIG. 1 illustrates an example manner for WLAN sensing;
FIG. 2 is a flowchart illustrating a communication method according to an embodiment;
FIG. 3 is a flowchart illustrating another communication method according to an embodiment;
FIG. 4 is a block diagram illustrating a communication apparatus according to an embodiment.

### DETAILED DESCRIPTION

The following description with reference to the accompanying drawings is provided to assist in fully understanding various embodiments of the present disclosure as defined by the appended claims. The various embodiments of the present disclosure include various specific details, but these specific details are considered exemplary only. In addition, descriptions of well-known techniques, functions, and constructions may be omitted for the sake of clarity and brevity.

Terms and phrases used in the present disclosure are not limited to their written meaning, but are used only by the inventors to enable a clear and consistent understanding of the present disclosure. Accordingly, for those skilled in the art, the description of the various embodiments of the present disclosure is provided for illustrative purposes only and is not intended to be limiting.

It should be understood that the singular forms "one", "a", "the", and "this" used herein may also include the plural form, unless the context clearly indicates otherwise. It should be further understood that the term "include" as used in the present disclosure refers to the presence of the described features, integers, steps, operations, elements, and/or components, but does not preclude the presence or addition of one or more other features, integers, steps, operations, elements, components, and/or groups thereof.

It will be understood that while the terms "first", "second", etc. may be used herein to describe various elements, these elements should not be limited by these terms. These terms are only used to distinguish one element from another. Thus, without departing from the teaching of the exemplary embodiments, the first element discussed below may be referred to as the second element.

It should be understood that when an element is referred to as "connected" or "coupled" to another element, it may be directly connected or coupled to the another element, or there may be an intermediate element. In addition, "connect" or "couple" as used herein may include wireless connecting or wireless coupling. The term "and/or" or the expression "at least one/at least one of ......" as used herein includes any of and all of combinations of one or more of the relevant listed items.

Unless otherwise defined, all terms used herein, including technical and scientific terms, have the same meaning as generally understood by those ordinary skilled in the art to which the present disclosure belongs.

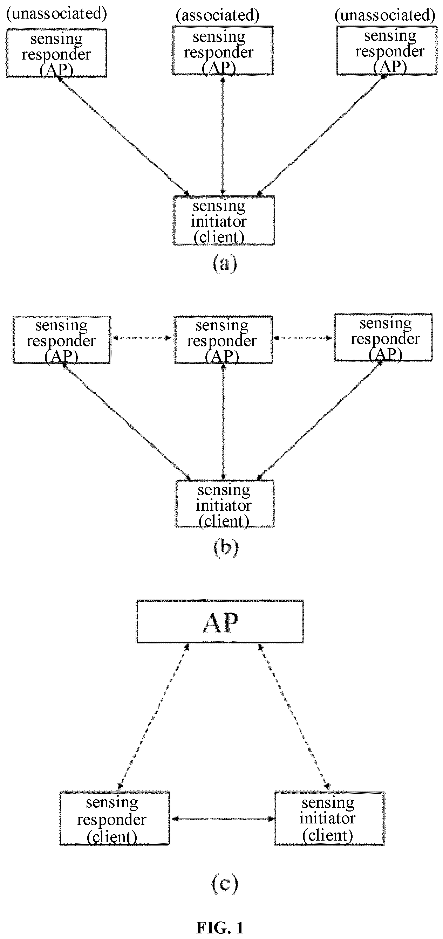

FIG. 1 illustrates an example manner for WLAN sensing.

The process of the WLAN sensing may be that an initiator initiates the WLAN sensing (e.g., initiates a WLAN sensing session), there may be a plurality of responders responding thereto, and specific possible implementations may be as illustrated in (a), (b) and (c) in FIG. 1.

Referring to (a) in FIG. 1, when the initiator (e.g., a client) for WLAN sensing initiates the WLAN sensing, a plurality of associated or unassociated responders (e.g., three access points (APs)) for WLAN sensing may respond thereto. Here, "associated" may mean that an associated connection for communication is established between the initiator and the responder, and "unassociated" may mean that the associated connection for communication is not established between the initiator and the responder.

As an example, the client may include, but is not limited to, a cellular phone, a smart phone, a wearable device, a computer, a personal digital assistant (PDA), a personal communication system (PCS) device, a personal information manager (PIM), a personal navigation device (PND), a global positioning system, a multimedia device, or an Internet of Things (IoT) device, etc.

The AP is a wireless switch for a wireless network, and is also an access device for the wireless network. The AP may include a software application and/or a circuit, thereby enabling other types of nodes in the wireless network to communicate via the AP with the outside and inside of the wireless network. As an example, the AP may be a terminal device or a network device equipped with a wireless fidelity (Wi-Fi) chip.

(b) in FIG. 1 is similar to (a) in FIG. 1, but in (b) of FIG. 1, communication may be carried out between individual responders (APs).

Referring to (c) in FIG. 1, both the WLAN sensing initiator and the WLAN sensing responder may be clients, and the initiator and the responder may communicate through connecting to the same AP.

Although it is illustrated in (a), (b) and (c) in FIG. 1 that the client serves as the initiator and the AP serves as the responder, the present disclosure is not limited thereto, e.g., the AP may serve as the initiator, and the client may serve as the responder. Furthermore, the number of the initiator and the number of the responder are not limited to that shown in (a), (b) and (c) of FIG. 1.

The WLAN sensing session (i.e., the process of the WLAN sensing) initiated by the initiator may include establishment of the WLAN sensing session, establishment of the WLAN sensing measurement, and termination of the WLAN sensing measurement.

In the establishment of the WLAN sensing session, the sensing session is established, and operational parameters associated with the sensing session are determined and exchanged between the devices (the initiator and the responder). In the establishment of the WLAN sensing measurement, a sensing measurement process may be established and sensing measurement may be performed during the sensing measurement process. In the termination of the WLAN sensing measurement, the device stops performing the measurement and terminates the sensing session.

In a sensing session, the establishment of the sensing measurement may be performed one or more times (i.e., one or more sensing measurement processes may be established), and each sensing measurement process may include at least one sensing measurement exchange. In each sensing measurement exchange, sensing measurement may be performed between the initiator and the responder. Here, the initiator may initiate the sensing measurement exchange and receive the sensing measurement feedback, and the responder may provide to the initiator the feedback of the result of the sensing measurement. For example, the sensing measurement feedback may be performed after each sensing measurement exchange, referred to as timely feedback, or the feedback of the result of the sensing measurement may be performed after all or a portion of the sensing measurement exchanges are completed, referred to as delayed feedback.

For the delayed feedback, the sensing measurement results of a plurality of sensing measurement establishments from the sensing responder may be included in a single measurement report frame used for delayed reporting. According to an embodiment of the present disclosure, each of the plurality of sensing measurement results included in the single measurement report frame may include channel state information (CSI). For example, the initiator may support obtaining the plurality of sensing measurement results from the single measurement report frame sent by the responder, and/or the responder may support caching the plurality of sensing measurement results and sending them to the initiator in the single measurement report frame. That is, a plurality of sensing measurement results may be aggregated in a single measurement report frame for feedback, but there is currently no mechanism for how the initiator can activate the responder to send the measurement report frame.

In view of the foregoing, a communication method and a communication apparatus are provided in accordance with the ideas of the embodiments of the present disclosure to at least address the above-described technical problems.

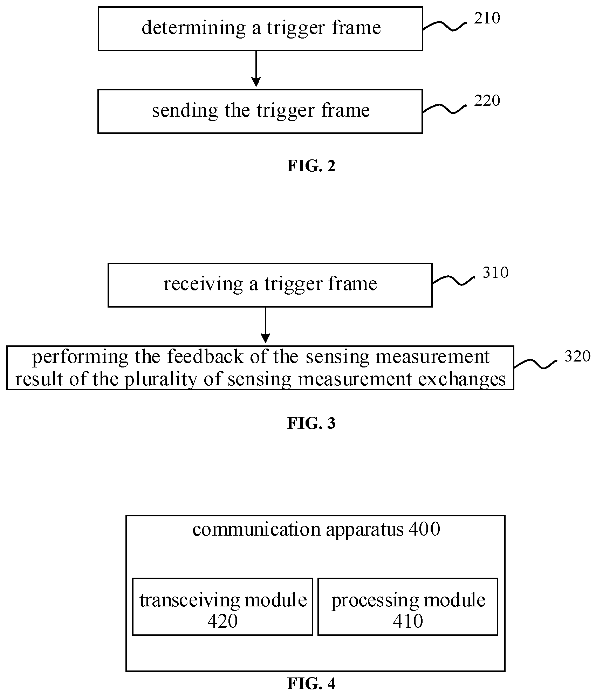

FIG. 2 is a flowchart illustrating a communication method according to an embodiment. The communication method shown in FIG. 2 may be a method performed by a WLAN sensing measurement initiator.

Referring to FIG. 2, in step 210, a trigger frame may be determined, where the trigger frame may include information of a plurality of sensing measurement exchanges for which feedback of a sensing measurement result is required, and the plurality of sensing measurement exchanges correspond to at least one sensing measurement process. In other words, the information in the trigger frame may indicate the feedback for a plurality of sensing measurement exchanges of at least one sensing measurement process. Furthermore, in the following, for ease of description, the sensing measurement result may be shortened to "measurement result".

In an embodiment of the present disclosure, there may be various ways to determine the trigger frame, for example, the trigger frame may be generated or configured based on at least one of: a channel state, a network condition, a load condition, a hardware capability of the sending/receiving device, a service type, or a relevant protocol provision; and the embodiments of the present disclosure do not make specific limitations on this. In an embodiment of the present disclosure, the trigger frame may also be obtained from an external device, and the embodiments of the present disclosure do not make specific limitations on this. In addition, although in the embodiments of the present disclosure, the feedback of the measurement result is triggered by the trigger frame, however, the present disclosure is not limited thereto, for example, the feedback of the measurement result may be requested by way of other message frames, e.g., the trigger frame in step 210 may be replaced with, for example, a measurement report request frame.

In step 220, the trigger frame may be sent. For example, the initiator may send the trigger frame (or measurement report request frame) to the responder to indicate the responder to perform the feedback of the measurement result (CSI) of the plurality of sensing measurement exchanges identified in the trigger frame.

In an embodiment of the present disclosure, the trigger frame determined in step 210 may correspond to a delayed feedback operation, the device (the initiator) sending the trigger frame supports the delayed feedback operation, and the supporting is determined during a sensing measurement session establishment process (e.g., with reference to "establishment of the WLAN sensing session" in the embodiment depicted in FIG. 1). For example, the capability of the device (the initiator) sending the trigger frame for supporting the delayed feedback operation may be identified in the sensing measurement parameter information element, and needs to be determined during the sensing measurement session establishment process.

In an embodiment of the present disclosure, the information in the trigger frame determined in step 210 may include: at least one sensing measurement establishment identifier corresponding to the at least one sensing measurement process respectively, and an identifier of at least one sensing measurement exchange, in the plurality of sensing measurement exchanges, corresponding to each sensing measurement establishment identifier. At least one sensing measurement establishment identifier may correspond to at least one sensing measurement process, and each sensing measurement process may include at least one (one or more) sensing measurement exchange. The at least one sensing measurement exchange corresponding to each sensing measurement establishment identifier may be identified in different ways.

In an embodiment of the present disclosure, the information in the trigger frame determined in step 210 may include: at least one sensing measurement establishment identifier corresponding to the at least one sensing measurement process respectively, and an identifier of at least one sensing measurement exchange, in the plurality of sensing measurement exchanges, corresponding to each sensing measurement establishment identifier. In some embodiments, the identifier of the at least one sensing measurement exchange corresponding to each sensing measurement establishment identifier may include at least one sensing measurement exchange report identifier corresponding to the at least one sensing measurement exchange respectively.

In an embodiment of the present disclosure, the information in the trigger frame may indicate feedback for a plurality of sensing measurement exchanges in a sensing measurement process. In this case, where a plurality of sensing measurement exchanges may be included in a measurement process, and the measurement results of the plurality of sensing measurement exchanges may be delayed feedback, then the format of the trigger frame (the measurement report request frame) may be as shown in Table 1 below.

**Table 1**

| | | | |
|---|---|---|---|
| Measurement setup ID | Instance ID1 report | Instance ID2 report | ... |

In Table 1, Measurement setup ID may refer to the sensing measurement establishment identifier in the trigger frame, and is used for identifying the sensing measurement process. Instance ID1 report and Instance ID2 report, etc. may refer to the identifiers of a first sensing measurement exchange and a second sensing measurement exchange corresponding to the sensing measurement establishment identifier, respectively. That is, the sensing measurement process corresponding to the sensing measurement establishment identifier of Measurement setup ID may include the first sensing measurement exchange, the second sensing measurement exchange, etc., and when the trigger frame includes the information as shown in Table 1, it may mean that the feedback of the measurement results for the first sensing measurement exchange, the second sensing measurement exchange, etc., in the sensing measurement process is required (e.g., indicate the feedback of the CSI of each sensing measurement exchange).

In an embodiment of the present disclosure, the information in the trigger frame may indicate feedback for a plurality of sensing measurement exchanges in a plurality of sensing measurement processes. In this case, the plurality of sensing measurement processes may include the plurality of sensing measurement exchanges, each sensing measurement process may include at least one sensing measurement exchange, and the format of the trigger frame (the measurement report request frame) may be as shown in Table 2 below.

**Table 2**

| | | | | | | |
|---|---|---|---|---|---|---|
| Measurement setup ID 1 | Instance ID11 report | Instance ID12 report | ... | Measurement setup ID2 | Instance ID21 report | ... |

In Table 2, Measurement setup ID1, Measurement setup ID2, etc. may refer to the sensing measurement establishment identifiers in the trigger frame, and are used for identifying a first sensing measurement process, a second sensing measurement process, etc. Instance ID11 report and Instance ID12 report, etc. corresponding to Measurement setup ID1 may refer to the identifiers of the first sensing measurement exchange and the second sensing measurement exchange corresponding to the sensing measurement establishment identifier of Measurement setup ID1 (the first sensing measurement process); Instance ID21 report, etc. corresponding to Measurement setup ID2 may refer to the identifier of the sensing measurement exchange corresponding to the sensing measurement establishment identifier of Measurement setup ID2 (the second sensing measurement process). That is, the first sensing measurement process corresponding to the sensing measurement establishment identifier of Measurement setup ID1 may include two or more sensing measurement exchanges, and the sensing measurement process corresponding to the sensing measurement establishment identifier of Measurement setup ID2 may include one or more sensing measurement exchanges, and so on. When the trigger frame includes the information as shown in Table 2, it may mean that the feedback of the measurement results for the first sensing measurement exchange, the second sensing measurement exchange, etc., in the first sensing measurement process and the sensing measurement exchange in the second sensing measurement process is required (e.g., indicate the feedback of the CSI of each sensing measurement exchange).

According to an embodiment of the present disclosure, the identifier of the at least one sensing measurement exchange corresponding to each sensing measurement establishment identifier may be identified in a manner different from Tables 1 and 2.

The information in the trigger frame determined in step 210 may include: at least one sensing measurement establishment identifier corresponding to the at least one sensing measurement process respectively, and an identifier of at least one sensing measurement exchange, in the plurality of sensing measurement exchanges, corresponding to each sensing measurement establishment identifier. In some embodiments, the identifier of the at least one sensing measurement exchange corresponding to each sensing measurement establishment identifier may include a sensing measurement exchange starting report identifier and a number of a sensing measurement exchange, where the sensing measurement exchange starting report identifier is used for indicating a start sensing measurement exchange for which the feedback of the sensing measurement result is required, and the number of the sensing measurement exchange is used for indicating a number of a sensing measurement exchange subsequent to the start sensing measurement exchange.

For example, when the information in the trigger frame may indicate the feedback for a plurality of sensing measurement exchanges in a sensing measurement process, the format of the trigger frame (the measurement report request frame) may be as shown in Table 3 below. For the sake of simplicity, the descriptions of the same identifiers as in Tables 1 and 2 are omitted in the following description.

**Table 3**

| | | |
|---|---|---|
| Measurement setup ID | Instance ID starting report | Number of instance |

Referring to Table 3, Instance ID starting report may refer to the sensing measurement exchange starting report identifier, and Number of instance may refer to the number of the sensing measurement exchange. For example, when the trigger frame includes the information as shown in Table 3, the responder may be indicated to perform the feedback of the measurement result (e.g., CSI) for a consecutive plurality of sensing measurement exchanges corresponding to the sensing measurement establishment identifier of Measurement setup ID. For example, the start sensing measurement exchange of the consecutive plurality of sensing measurement exchanges may be identified by Instance ID starting report, and the number of the following measurement exchanges is identified by number of instance. For example, when the Instance ID starting report identifier corresponds to a first sensing measurement exchange in the sensing measurement process, and the number identified by number of instance is 2, the feedback of measurement results for the first sensing measurement exchange through the third sensing measurement exchange in the sensing measurement process may be indicated.

For example, when the information in the trigger frame may indicate feedback for a plurality of sensing measurement exchanges in a plurality of sensing measurement processes, the format of the trigger frame (the measurement report request frame) may be as shown in Table 4 below.

**Table 4**

| | | | | | | |
|---|---|---|---|---|---|---|
| Measurement setup ID 1 | Instance ID starting report | Number of instance | Measurement setup ID2 | Instance ID starting report | Number of instance | ... |

Referring to Table 4, there are shown the sensing measurement establishment identifiers of Measurement setup ID1, Measurement setup ID2, etc. corresponding to two (or more) sensing measurement processes, and the sensing measurement exchange starting report identifier (Instance ID starting report) and the number of the sensing measurement exchange (Number of instance) corresponding to each sensing measurement establishment identifier. The sensing measurement exchange starting report identifier (Instance ID starting report) and the number of the sensing measurement exchange (Number of instance) may be different in Measurement setup ID1 and Measurement setup ID2, however, the present disclosure is not limited to this.

The sensing measurement establishment identifiers of Measurement setup ID1 and Measurement setup ID2 and their corresponding sensing measurement exchange starting report identifiers (Instance ID starting reports) and numbers of the sensing measurement exchanges (Numbers of instance) may be similar to those in Table 3, where repetitive descriptions are omitted to avoid redundancy.

In addition, while it is shown in Tables 3 and 4 that each sensing measurement establishment identifier includes only one sensing measurement exchange starting report identifier (Instance ID starting report) and its corresponding number of the sensing measurement exchange (Number of instance), the present disclosure is not limited thereto. For example, each sensing measurement establishment identifier may include a greater number of different sensing measurement exchange starting report identifiers and their respective corresponding number of the sensing measurement exchange.

It will be understood that the formats of the trigger frames (information included in the trigger frames) shown in Tables 1 to 4 are only exemplary, and the present disclosure is not limited thereto. Portions of Tables 1 to 4 may be omitted, for example, in Table 4, when Measurement setup ID1 and Measurement setup ID2 correspond to the same sensing measurement exchange starting report identifier and the same number of sensing measurement exchanges, a sensing measurement exchange starting report identifier and its number of sensing measurement exchanges may be used to identify the sensing measurement exchanges corresponding to Measurement setup ID1 and Measurement setup ID2; or portions of Tables 1 to 4 may be combined, e.g., in Table 3 or 4, at least one sensing measurement exchange may be identified by using the format shown in Table 1 for Measurement setup ID1, and at least one sensing measurement exchange may be identified by using the format shown in Table 3 for Measurement setup ID2; or Tables 1 to 4 may include other more content.

According to an embodiment of the present disclosure, the communication method shown in FIG. 2 may be performed by an access point device (AP), e.g., the device (the initiator) that determines and sends the trigger frame may be an AP. In this case, the information in the trigger frame may include, in addition to the information shown in any of the embodiments described with reference to Tables 1 to 4, identifier(s) of one or more sites participating in the at least one sensing measurement process. That is, the access point device may send the trigger frame to a plurality of sites to indicate the plurality of sites to perform the feedback of the measurement result (e.g., CSI) of a plurality of sending measurement exchanges.

The one or more sites participating in the at least one sensing measurement process may be identified in different ways. According to an embodiment of the present disclosure, the identifier(s) of the one or more sites included in the trigger frame may include at least one of:
an identifier (AID) of a site that establishes associated communication with the access point device;
an identifier (UID) of a site that does not establish associated communication with the access point device; or
a media access control (MAC) address of the site.

For example, in the case where the device (the initiator) sending the trigger frame is an access point device and indicates one site, the above Tables 1 to 4 may be transformed into Tables 5 to 8 below, respectively.

**Table 5**

| | | | | |
|---|---|---|---|---|
| AID/UID/MAC | Measurement setup ID | Instance ID1 report | Instance ID2 report | ... |

**Table 6**

| | | | | | | | |
|---|---|---|---|---|---|---|---|
| AID/UID/MAC | Measurement setup ID 1 | Instance ID11 report | Instance ID12 report | ... | Measurement setup ID2 | Instance ID21 report | ... |

**Table 7**

| | | | |
|---|---|---|---|
| AID/UID/MAC | Measurement setup ID | Instance ID starting report | Number of instance |

**Table 8**

| | | | | | | | |
|---|---|---|---|---|---|---|---|
| AID/UID/MAC | Measurement setup ID 1 | Instance ID starting report | Number of instance | Measurement setup ID2 | Instance ID starting report | Number of instance | ... |

In Tables 5 to 8, the content is the same as Tables 1 to 4 except that AID/UID/MAC identifying the site is also included, and the repetitive descriptions are omitted here to avoid redundancy.

However, the trigger frames shown in Tables 5 to 8 are only exemplary, and the present disclosure is not limited thereto.

According to an embodiment of the present disclosure, the information in the trigger frame may include, in addition to the information shown in any of the embodiments described with reference to Tables 5 to 8, a communication resource unit (RU, radio unit) assigned for the feedback of the sensing measurement result of the sensing measurement exchanges. For feedback of different sensing measurement exchanges, the sizes of the RUs assigned by the AP for the feedback of the sensing measurement exchanges may be different or the same. By setting the RU required for the feedback of each sensing measurement exchange in the trigger frame, communication resources can be assigned reasonably, so that the receiver can use the RU as set to perform the feedback for the corresponding sensing measurement exchange, which avoids interference between devices.

For example, in the case where the device (the initiator) sending the trigger frame is an access point device and indicates one or more sites to perform feedback of a plurality of measurement results at the same time, the trigger frame may have the format shown in Tables 9 to 12 below.

**Table 9**

| | | | | | | |
|---|---|---|---|---|---|---|
| AID/UID/MAC | Measurement setup ID | Instance ID1 report | RU for Instance ID1 | Instance ID2 report | RU for Instance ID1 | ... |

**Table 10**

| | | | | | |
|---|---|---|---|---|---|
| AID/UID/MAC | Measurement setup ID 1 | Instance ID1 report | Instance ID2 report | RU for measurement setup ID 1 | ... |
| AID/UID/MAC | Measurement setup ID2 | Instance ID1 report | RU for measurement setup ID2 | ... | |

**Table 11**

| | | | | | |
|---|---|---|---|---|---|
| AID/UID/MAC | Measurement setup ID | Instance ID starting report | Number of instance | RU for measurement setup ID | ... |

**Table 12**

| | | | | | |
|---|---|---|---|---|---|
| AID/UID/MAC | Measurement setup ID 1 | Instance ID starting report | Number of instance | RU for measurement setup ID 1 | ... |
| AID/UID/MAC | Measurement setup ID2 | Instance ID starting report | Number of instance | RU for measurement setup ID2 | ... |

In Tables 9 to 12, examples of the AP indicating at least one site to perform feedback of the measurement result are illustrated (e.g., Tables 9 and 11 correspond to the case of one site, and Tables 10 and 12 correspond to the case of two sites). Furthermore, while in Tables 9 to 12 it is shown that each site corresponds to one sensing measurement establishment identifier, the present disclosure is not limited thereto, and each site may correspond to a greater number of sensing measurement establishment identifiers. Further, as illustrated in Tables 10 to 12, the RU corresponds to the sensing measurement establishment identifier (e.g., RU for measurement setup ID, RU for measurement setup ID1, RU for measurement setup ID2, etc.), which may indicate that the RUs assigned for the sensing measurement exchanges corresponding to the sensing measurement establishment identifier that corresponds to the RU is the same. However, the present disclosure is not limited thereto, for example, the RUs assigned for the sensing measurement exchanges may be different, e.g., the RUs in Tables 10 to 12 may be set to correspond to the sensing measurement exchanges (e.g., the RU in Tables 10 to 12 may be similar to RU for Instance ID1, RU for Instance ID2, and the like as shown in Table 9).

According to an embodiment of the present disclosure, the communication method shown in FIG. 2 may be performed by a non-access point device (non-AP, e.g., the client in FIG. 1), e.g., the device (the initiator) that determines and sends the trigger frame may be a non-access point device. In this case, due to the capacity limitations of the non-access point device, the non-access point device can only send the trigger frame, as shown in Tables 1 to 4, to one responder, and receive the feedback (CSI) for a plurality of sensing measurement exchanges from the responder.

The communication method shown in FIG. 2 according to the embodiments of the present disclosure and the trigger frame described with reference to Tables 1 to 12 may trigger the sending of the measurement report frame including a plurality of measurement results, which saves the resource overhead.

FIG. 3 is a flowchart illustrating another communication method according to an embodiment. The communication method illustrated in FIG. 3 may be a method performed by a WLAN sensing measurement responder.

Referring to FIG. 3, in step 310, a trigger frame is received, where the trigger frame may include information of a plurality of sensing measurement exchanges for which feedback of a sensing measurement result is required, and the plurality of sensing measurement exchanges correspond to at least one sensing measurement process. In step 320, the feedback of the sensing measurement result of the plurality of sensing measurement exchanges is performed based on the trigger frame. For example, the responder may perform, by sending a measurement report frame based on the information in the trigger frame, the feedback of the CSI of the plurality of sensing measurement exchanges as identified.

According to an embodiment of the present disclosure, the information in the trigger frame as received may include: at least one sensing measurement establishment identifier corresponding to the at least one sensing measurement process respectively, and an identifier of at least one sensing measurement exchange, in the plurality of sensing measurement exchanges, corresponding to each sensing measurement establishment identifier. In some embodiments, the identifier of the at least one sensing measurement exchange corresponding to each sensing measurement establishment identifier may include at least one sensing measurement exchange report identifier corresponding to the at least one sensing measurement exchange respectively.

According to an embodiment of the present disclosure, the information in the trigger frame as received may include: at least one sensing measurement establishment identifier corresponding to the at least one sensing measurement process respectively, and an identifier of at least one sensing measurement exchange, in the plurality of sensing measurement exchanges, corresponding to each sensing measurement establishment identifier. In some embodiments, the identifier of the at least one sensing measurement exchange corresponding to each sensing measurement establishment identifier may include a sensing measurement exchange starting report identifier and a number of a sensing measurement exchange, where the sensing measurement exchange starting report identifier is used for indicating a start sensing measurement exchange for which the feedback of the sensing measurement result is required, and the number of the sensing measurement exchange is used for indicating a number of a sensing measurement exchange subsequent to the start sensing measurement exchange.

According to an embodiment of the present disclosure, in the case where the trigger frame is received from an access point device, the information in the trigger frame may include, in addition to the information shown in any of the embodiments described with reference to Tables 1 to 4, identifier(s) of one or more sites participating in the at least one sensing measurement process. For example, as described with reference to any of the embodiments described in Tables 5 to 8, the identifier(s) of the one or more sites may include at least one of: an identifier of a site that establishes associated communication with the access point device; an identifier of a site that does not establish associated communication with the access point device; or an MAC address of the site.

According to an embodiment of the present disclosure, the information in the trigger frame may include, in addition to the information shown in any of the embodiments described with reference to Tables 5 to 8, a communication resource unit assigned for the feedback of the sensing measurement result of the sensing measurement exchanges, e.g., as described in any of the embodiments in Tables 9 to 12.

According to an embodiment of the present disclosure, the trigger frame corresponds to a delayed feedback operation and the device receiving the trigger frame supports the delayed feedback operation, and the supporting is determined during a sensing measurement session establishment process.

The embodiments of the trigger frames and the information included therein described above with reference to Tables 1 to 12 may be applied herein, and repetitive descriptions are omitted herein for the sake of brevity.

The communication method shown in FIG. 3 according to the embodiments of the present disclosure and the trigger frame described with reference to Tables 1 to 12 may trigger the sending of the measurement report frame including a plurality of measurement results, which saves the resource overhead.

FIG. 4 is a block diagram illustrating a communication apparatus according to an embodiment. The communication apparatus 400 of FIG. 4 may include a processing module 410 and a transceiving module 420.

The communication apparatus 400 of FIG. 4 may be applied to a WLAN sensing measurement initiator, in which case the processing module 410 may be configured to determine a trigger frame, where the trigger frame may include information of a plurality of sensing measurement exchanges for which feedback of a sensing measurement result is required, and the plurality of sensing measurement exchanges correspond to at least one sensing measurement process; and the transceiving module 420 may be configured to send the trigger frame.

That is, the communication apparatus 400 shown in FIG. 4 may perform the communication method described with reference to FIG. 2, and the embodiments described above with respect to the trigger frame and the various pieces of information included therein (Tables 1 to 12) may be applied thereto, and repetitive descriptions are omitted herein in order to avoid redundancy.

The communication apparatus 400 of FIG. 4 may be applied to a WLAN sensing measurement responder, in which case the transceiving module 420 may be configured to receive a trigger frame, where the trigger frame may include information of a plurality of sensing measurement exchanges for which feedback of a sensing measurement result is required, and the plurality of sensing measurement exchanges correspond to at least one sensing measurement process; and the processing module 410 may be configured to control, based on the trigger frame, the transceiving module 420 to perform the feedback of the sensing measurement result of the plurality of sensing measurement exchanges.

That is, the communication apparatus 400 shown in FIG. 4 may perform the communication method described with reference to FIG. 3, and the embodiments described above with respect to the trigger frame and the various pieces of information included therein (Tables 1 to 12) may be applied thereto, and repetitive descriptions are omitted herein in order to avoid redundancy.

It will be understood that the communication apparatus 400 shown in FIG. 4 is only exemplary, and the embodiments of the present disclosure are not limited thereto, e.g., the communication apparatus 400 may also include other modules, e.g., a memory module and the like. Furthermore, modules in the communication apparatus 400 may be combined into more complex modules or may be divided into more separate modules.

The communication method and communication apparatus according to the embodiments of the present disclosure trigger the sending of the measurement report frame including a plurality of measurement results, which saves the resource overhead.

Based on the same principles as the method provided in the embodiments of the present disclosure, the embodiments of the present disclosure also provide an electronic device that includes a processor and a memory; where the memory stores a machine-readable instruction (which may also be referred to as "computer program"), and the processor is configured to execute the machine-readable instruction to implement the method described with reference to FIGS. 2 and 3.

The embodiments of the present disclosure also provide a computer-readable storage medium. The computer-readable storage medium stores a computer program, and the computer program, when executed by a processor, implements the method described with reference to FIGS. 2 and 3.

In an exemplary embodiment, the processor may be used for implementing or executing various exemplary logic blocks, modules, and circuits described in conjunction with the content in the present disclosure, for example, a central processing unit (CPU), a general purpose processor, a digital signal processor (DSP), an application specific integrated circuit (ASIC), a field programmable gate array (FPGA), or other programmable logic devices, transistor logic devices, hardware components, or any combination thereof. The processor may also be a combination that implements computing functions, such as a combination including one or more microprocessors, a combination of a DSP and a microprocessor, and the like.

In an exemplary embodiment, the memory may be, for example, a read only memory (ROM), a random access memory (RAM), an electrically erasable programmable read only memory (EEPROM), a compact disc read only memory (CD-ROM), or other compact disc storage, optical disc storage (including compressed optical discs, laser discs, optical discs, digital versatile discs, Blu-ray discs, etc.), disk storage media or other magnetic storage devices, or any other media capable of being used to carry or store program code in the form of instructions or data structures and capable of being accessed by a computer, but not limited to this.

It should be understood that although various steps in the flowchart of the accompanying drawings are shown in sequence as indicated by arrows, these steps are not necessarily performed in the order indicated by the arrows. Unless explicitly stated in this article, the execution of these steps is not strictly limited in order, and they can be executed in other orders. Moreover, at least a portion of the steps in the flowchart of the accompanying drawings may include multiple sub-steps or multiple stages. These sub-steps or stages are not necessarily executed at the same time, but may be executed at different times. The execution order of these sub-steps or stages is also not necessarily sequential, and these sub-steps or stages may be performed in turn or alternately with other steps, sub-steps of other steps, or at least a portion of the stages.

While the present disclosure has been shown and described with reference to certain embodiments of the present disclosure, those skilled in the art will understand that various changes in form and detail may be made without departing from the scope of the present disclosure. Accordingly, the scope of the present disclosure should not be limited to the embodiments, but should be defined by the appended claims

## Claims

1. A communication method, performed by a wireless local area network, WLAN, sensing measurement initiator, the method comprising:
determining (210) a trigger frame, wherein the trigger frame comprises information of a plurality of sensing measurement exchanges requiring feedback of a sensing measurement result, and the plurality of sensing measurement exchanges correspond to at least one sensing measurement process; and
sending (220) the trigger frame; wherein
the information comprises:
at least one sensing measurement establishment identifier in one-to-one correspondence with the at least one sensing measurement process, and
a plurality of identifiers of the plurality of sensing measurement exchanges, wherein the plurality of identifiers of the plurality of sensing measurement exchanges correspond to one of the at least one sensing measurement establishment identifier;
wherein the method is **characterized in that**
at least one of the plurality of identifiers of the plurality of sensing measurement exchanges comprises a sensing measurement exchange starting report identifier and a number of a sensing measurement exchange, the sensing measurement exchange starting report identifier indicates a start sensing measurement exchange requiring the feedback of the sensing measurement result, and the number of the sensing measurement exchange indicates a number of a sensing measurement exchange subsequent to the start sensing measurement exchange.

2. The communication method according to claim 1, wherein the plurality of identifiers of the plurality of sensing measurement exchanges comprises:
a plurality of sensing measurement exchange report identifiers in one-to-one correspondence with the sensing measurement exchanges.

3. The communication method according to any one of claims 1 and 2, wherein the initiator is an access point, AP, and the information comprises:
identifiers of one or more sites participating in the at least one sensing measurement process.

4. The communication method according to claim 3, wherein the identifiers of the one or more sites comprise at least one of:
an identifier of a site that establishes associated communication with the AP;
an identifier of a site that does not establish associated communication with the AP; or
a media access control, MAC, address of the site.

5. The communication method according to any one of claims 1 to 4, wherein the trigger frame corresponds to a delayed feedback operation, and the communication method further comprises:
determining, during a sensing measurement session establishment process, the initiator supports the delayed feedback operation.

6. A communication method, performed by a wireless local area network, WLAN, sensing measurement responder, the method comprising:
receiving (310) a trigger frame, wherein the trigger frame comprises information of a plurality of sensing measurement exchanges requiring feedback of a sensing measurement result, and the plurality of sensing measurement exchanges correspond to at least one sensing measurement process; and
performing (320), based on the trigger frame, the feedback of the sensing measurement result of the plurality of sensing measurement exchanges; wherein
the information comprises:
at least one sensing measurement establishment identifier in one-to-one correspondence with the at least one sensing measurement process, and
a plurality of identifiers of the plurality of sensing measurement exchanges, wherein the plurality of identifiers of the plurality of sensing measurement exchanges correspond to one of the at least one sensing measurement establishment identifier;
wherein the method is **characterized in that**
at least one of the plurality of identifiers of the plurality of sensing measurement exchanges comprises a sensing measurement exchange starting report identifier and a number of a sensing measurement exchange, the sensing measurement exchange starting report identifier indicates a start sensing measurement exchange requiring the feedback of the sensing measurement result, and the number of the sensing measurement exchange indicates a number of a sensing measurement exchange subsequent to the start sensing measurement exchange.

7. The communication method according to claim 6, wherein the plurality of identifiers of the plurality of sensing measurement exchanges comprises:
a plurality of sensing measurement exchange report identifiers, wherein the sensing measurement exchange report identifiers are in one-to-one correspondence with the sensing measurement exchanges.

8. The communication method according to any one of claims 6 and 7, wherein the trigger frame is received from an access point, AP, and the information comprises:
identifiers of one or more sites participating in the at least one sensing measurement process.

9. The communication method according to any one of claims 6 to 8, wherein the information comprises:
sub-information of a communication resource unit assigned for the feedback of the sensing measurement result of the sensing measurement exchanges;
or
the trigger frame corresponds to a delayed feedback operation, and the communication method further comprises:
determining, during a sensing measurement session establishment process, the responder supports the delayed feedback operation.

10. A wireless local area network, WLAN, sensing measurement initiator, **characterized by** comprising
a processor; and
a memory storing a computer program executable by the processor, wherein the processor, through executing the computer program, is configured to perform the communication method according to any one of claims 1 to 5.

11. A wireless local area network, WLAN, sensing measurement responder, **characterized by** comprising:
a processor; and
a memory storing a computer program executable by the processor, wherein the processor, through executing the computer program, is configured to perform the communication method according to any one of claims 6 to 9

12. A non-transitory computer-readable storage medium, **characterized in that** the computer-readable storage medium stores a computer program, and the computer program, when executed by a processor of a wireless local area network, WLAN, sensing measurement initiator, causes the processor to perform the communication method according to any one of claims 1 to 5.

13. A non-transitory computer-readable storage medium, **characterized in that** the computer-readable storage medium stores a computer program, and the computer program, when executed by processor of a wireless local area network, WLAN, sensing measurement responder, causes the processor to perform the communication method according to any one of claims 6 to 9.

## Patentansprüche

1. Kommunikationsverfahren, durchgeführt von einem Initiator für WLAN-(Wireless Local Area Network-)Sensormessungen, wobei das Verfahren Folgendes umfasst:
Bestimmen (210) eines Auslöser-Frames, wobei der Auslöser-Frame Informationen über mehrere Sensormessungsaustausche umfasst, die eine Rückmeldung eines Sensormessungsergebnisses erfordern, und die mehreren Sensormessungsaustausche mindestens einem Sensormessungsprozess entsprechen; und
Senden (220) des Auslöser-Frames;
wobei die Informationen Folgendes umfassen:
mindestens eine Sensormessungseinrichtungs-Kennung in einer Eins-zu-Eins-Entsprechung mit dem mindestens einen Sensormessungsprozess, und
mehrere Kennungen der mehreren Sensormessungsaustausche, wobei die mehreren Kennungen der mehreren Sensormessungsaustausche einer der mindestens einen Sensormessungseinrichtungs-Kennungen entsprechen;
wobei das Verfahren **dadurch gekennzeichnet ist, dass** mindestens eine der mehreren Kennungen der mehreren Sensormessungsaustausche eine Kennung für einen Startbericht eines Sensormessungsaustauschs und eine Nummer eines Sensormessungsaustauschs umfasst, wobei die Kennung für den Startbericht eines Sensormessungsaustauschs einen Start-Sensormessungsaustausch angibt, der die Rückmeldung des Sensormessungsergebnisses erfordert, und die Nummer des Sensormessungsaustauschs eine Nummer eines Sensormessungsaustauschs angibt, der auf den Start-Sensormessungsaustausch folgt.

2. Kommunikationsverfahren nach Anspruch 1, wobei die mehreren Kennungen der mehreren Sensormessungsaustausche Folgendes umfassen:
mehrere Sensormessungsaustausch-Berichtskennungen in einer Eins-zu-Eins-Entsprechung mit den Sensormessungsaustauschen.

3. Kommunikationsverfahren nach einem der Ansprüche 1 oder 2, wobei der Initiator ein Zugangspunkt (AP) ist und die Informationen Folgendes umfassen:
Kennungen von einem oder mehreren Teilnehmern, die an dem mindestens einen Sensormessungsprozess teilnehmen.

4. Kommunikationsverfahren nach Anspruch 3, wobei die Kennungen der einen oder mehreren Teilnehmer mindestens eines der folgenden Elemente umfassen:
eine Kennung eines Teilnehmers, der eine assoziierte Kommunikation mit dem AP einrichtet;
eine Kennung eines Teilnehmers, der keine assoziierte Kommunikation mit dem AP einrichtet; oder
eine MAC-Adresse (Media Access Control) des Teilnehmers.

5. Kommunikationsverfahren nach einem der Ansprüche 1 bis 4, wobei der Auslöser-Frame einem verzögerten Rückmeldebetrieb entspricht und das Kommunikationsverfahren ferner Folgendes umfasst:
Bestimmen, während eines Sensormessungssitzungseinrichtungsprozesses, dass der Initiator den verzögerten Rückmeldebetrieb unterstützt.

6. Kommunikationsverfahren, durchgeführt von einem WLAN-Sensormessungs-Antworter, wobei das Verfahren Folgendes umfasst:
Empfangen (310) eines Auslöser-Frames, wobei der Auslöser-Frame Informationen über mehrere Sensormessungsaustausche umfasst, die eine Rückmeldung eines Sensormessungsergebnisses erfordern, und die mehreren Sensormessungsaustausche mindestens einem Sensormessungsprozess entsprechen; und
Durchführen (320), basierend auf dem Auslöser-Frame, der Rückmeldung des Sensormessungsergebnisses der mehreren Sensormessungsaustausche;
wobei die Informationen Folgendes umfassen:
mindestens eine Sensormessungseinrichtungs-Kennung in einer Eins-zu-Eins-Entsprechung mit dem mindestens einen Sensormessungsprozess, und
mehrere Kennungen der mehreren Sensormessungsaustausche, wobei die mehreren Kennungen der mehreren Sensormessungsaustausche einer der mindestens einen Sensormessungseinrichtungs-Kennungen entsprechen;
wobei das Verfahren **dadurch gekennzeichnet ist, dass** mindestens eine der mehreren Kennungen der mehreren Sensormessungsaustausche eine Kennung für den Startbericht eines Sensormessungsaustauschs und eine Nummer eines Sensormessungsaustauschs umfasst, wobei die Kennung für den Startbericht eines Sensormessungsaustauschs einen Start-Sensormessungsaustausch angibt, der die Rückmeldung des Sensormessungsergebnisses erfordert, und die Nummer des Sensormessungsaustauschs eine Nummer eines Sensormessungsaustauschs angibt, der auf den Start-Sensormessungsaustausch folgt.

7. Kommunikationsverfahren nach Anspruch 6, wobei die mehreren Kennungen der mehreren Sensormessungsaustausche Folgendes umfassen:
mehrere Sensormessungsaustausch-Berichtskennungen, wobei die Sensormessungsaustausch-Berichtskennungen in einer Eins-zu-Eins-Entsprechung mit den Sensormessungsaustauschen stehen.

8. Kommunikationsverfahren nach einem der Ansprüche 6 oder 7, wobei der Auslöser-Frame von einem Zugangspunkt (AP) empfangen wird und die Informationen Folgendes umfassen:
Kennungen von einem oder mehreren Teilnehmern, die an dem mindestens einen Sensormessungsprozess teilnehmen.

9. Kommunikationsverfahren nach einem der Ansprüche 6 bis 8, wobei die Informationen Folgendes umfassen:
Teilinformationen einer Kommunikationsressourceneinheit, die für die Rückmeldung des Sensormessungsergebnisses der Sensormessungsaustausche zugewiesen ist; oder
wobei der Auslöser-Frame einem verzögerten Rückmeldebetrieb entspricht und das Kommunikationsverfahren ferner Folgendes umfasst:
Bestimmen, während eines Sensormessungssitzungseinrichtungsprozesses, dass der Antworter den verzögerten Rückmeldebetrieb unterstützt.

10. WLAN-Sensormessungsinitiator, **gekennzeichnet durch** Folgendes:
einen Prozessor; und
einen Speicher, der ein vom Prozessor ausführbares Computerprogramm speichert, wobei der Prozessor durch Ausführen des Computerprogramms konfiguriert ist, um das Kommunikationsverfahren nach einem der Ansprüche 1 bis 5 durchzuführen.

11. WLAN-Sensormessungs-Antworter, **gekennzeichnet durch** Folgendes:
einen Prozessor; und
einen Speicher, der ein vom Prozessor ausführbares Computerprogramm speichert, wobei der Prozessor durch Ausführen des Computerprogramms konfiguriert ist, um das Kommunikationsverfahren nach einem der Ansprüche 6 bis 9 durchzuführen.

12. Nichtflüchtiges computerlesbares Speichermedium, **dadurch gekennzeichnet, dass** das computerlesbare Speichermedium ein Computerprogramm speichert und das Computerprogramm, wenn es von einem Prozessor eines WLAN-Sensormessungsinitiators ausgeführt wird, den Prozessor veranlasst, das Kommunikationsverfahren nach einem der Ansprüche 1 bis 5 durchzuführen.

13. Nichtflüchtiges computerlesbares Speichermedium, **dadurch gekennzeichnet, dass** das computerlesbare Speichermedium ein Computerprogramm speichert und das Computerprogramm, wenn es von einem Prozessor eines WLAN-Sensormessungs-Antworters ausgeführt wird, den Prozessor veranlasst, das Kommunikationsverfahren nach einem der Ansprüche 6 bis 9 durchzuführen.

## Revendications

1. Procédé de communication, mis en œuvre par un initiateur de mesure de détection de réseau local sans fil, WLAN, le procédé comprenant :
la détermination (210) d'une trame de déclenchement, dans lequel la trame de déclenchement comprend des informations concernant une pluralité d'échanges de mesure de détection nécessitant un retour d'un résultat de mesure de détection, et la pluralité d'échanges de mesure de détection correspondent à au moins un processus de mesure de détection ; et
l'envoi (220) de la trame de déclenchement ; dans lequel les informations comprennent :
au moins un identifiant d'établissement de mesure de détection en correspondance biunivoque avec l'au moins un processus de mesure de détection, et
une pluralité d'identifiants de la pluralité d'échanges de mesure de détection, dans lequel la pluralité d'identifiants de la pluralité d'échanges de mesure de détection correspondent à l'un des au moins un identifiant d'établissement de mesure de détection ;
le procédé étant **caractérisé en ce qu'**au moins l'un de la pluralité d'identifiants de la pluralité d'échanges de mesure de détection comprend un identifiant de rapport de début d'échange de mesure de détection et un numéro d'échange de mesure de détection, l'identifiant de rapport de début d'échange de mesure de détection indiquant un échange de mesure de détection de début nécessitant le retour du résultat de mesure de détection, et le numéro de l'échange de mesure de détection indiquant un numéro d'un échange de mesure de détection ultérieur à l'échange de mesure de détection de début.

2. Procédé de communication selon la revendication 1, dans lequel la pluralité d'identifiants de la pluralité d'échanges de mesure de détection comprend :
une pluralité d'identifiants de rapport d'échange de mesure de détection en correspondance biunivoque avec les échanges de mesure de détection.

3. Procédé de communication selon l'une quelconque des revendications 1 et 2, dans lequel l'initiateur est un point d'accès, AP, et les informations comprennent :
des identifiants d'un ou plusieurs sites participant à l'au moins un processus de mesure de détection.

4. Procédé de communication selon la revendication 3, dans lequel les identifiants des un ou plusieurs sites comprennent au moins l'un des éléments suivants :
un identifiant d'un site qui établit une communication associée avec l'AP ;
un identifiant d'un site qui n'établit pas de communication associée avec l'AP ; ou
une adresse de contrôle d'accès au support, MAC, du site.

5. Procédé de communication selon l'une quelconque des revendications 1 à 4, dans lequel la trame de déclenchement correspond à une opération de retour différé, et le procédé de communication comprend en outre :
la détermination, lors d'un processus d'établissement de session de mesure de détection, que l'initiateur supporte l'opération de retour différé.

6. Procédé de communication, mis en œuvre par un répondeur de mesure de détection de réseau local sans fil, WLAN, le procédé comprenant :
la réception (310) d'une trame de déclenchement, dans lequel la trame de déclenchement comprend des informations concernant une pluralité d'échanges de mesure de détection nécessitant un retour d'un résultat de mesure de détection, et la pluralité d'échanges de mesure de détection correspondent à au moins un processus de mesure de détection ; et
la réalisation (320), sur la base de la trame de déclenchement, du retour du résultat de mesure de détection de la pluralité d'échanges de mesure de détection ; dans lequel
les informations comprennent :
au moins un identifiant d'établissement de mesure de détection en correspondance biunivoque avec l'au moins un processus de mesure de détection, et
une pluralité d'identifiants de la pluralité d'échanges de mesure de détection,
dans lequel la pluralité d'identifiants de la pluralité d'échanges de mesure de détection correspondent à l'un des au moins un identifiant d'établissement de mesure de détection ; le procédé étant **caractérisé en ce qu'**au moins l'un de la pluralité d'identifiants de la pluralité d'échanges de mesure de détection comprend un identifiant de rapport de début d'échange de mesure de détection et un numéro d'échange de mesure de détection, l'identifiant de rapport de début d'échange de mesure de détection indiquant un échange de mesure de détection de début nécessitant le retour du résultat de mesure de détection, et le numéro de l'échange de mesure de détection indiquant un numéro d'un échange de mesure de détection ultérieur à l'échange de mesure de détection de début.

7. Procédé de communication selon la revendication 6, dans lequel la pluralité d'identifiants de la pluralité d'échanges de mesure de détection comprend :
une pluralité d'identifiants de rapport d'échange de mesure de détection, dans lequel les identifiants de rapport d'échange de mesure de détection sont en correspondance biunivoque avec les échanges de mesure de détection.

8. Procédé de communication selon l'une quelconque des revendications 6 et 7, dans lequel la trame de déclenchement est reçue d'un point d'accès, AP, et les informations comprennent :
des identifiants d'un ou plusieurs sites participant à l'au moins un processus de mesure de détection.

9. Procédé de communication selon l'une quelconque des revendications 6 à 8, dans lequel les informations comprennent :
des sous-informations d'une unité de ressource de communication attribuée pour le retour du résultat de mesure de détection des échanges de mesure de détection ; ou
la trame de déclenchement correspond à une opération de retour différé, et le procédé de communication comprend en outre :
la détermination, lors d'un processus d'établissement de session de mesure de détection, que le répondeur supporte l'opération de retour différé.

10. Initiateur de mesure de détection de réseau local sans fil, WLAN, **caractérisé en ce qu'**il comprend :
un processeur ; et
une mémoire stockant un programme informatique exécutable par le processeur, dans lequel le processeur, en exécutant le programme informatique, est configuré pour mettre en œuvre le procédé de communication selon l'une quelconque des revendications 1 à 5.

11. Répondeur de mesure de détection de réseau local sans fil, WLAN, **caractérisé en ce qu'**il comprend :
un processeur ; et
une mémoire stockant un programme informatique exécutable par le processeur, dans lequel le processeur, en exécutant le programme informatique, est configuré pour mettre en œuvre le procédé de communication selon l'une quelconque des revendications 6 à 9.

12. Support de stockage non transitoire lisible par ordinateur, **caractérisé en ce que** le support de stockage lisible par ordinateur stocke un programme informatique, et le programme informatique, lorsqu'il est exécuté par un processeur d'un initiateur de mesure de détection de réseau local sans fil, WLAN, amène le processeur à mettre en œuvre le procédé de communication selon l'une quelconque des revendications 1 à 5.

13. Support de stockage non transitoire lisible par ordinateur, **caractérisé en ce que** le support de stockage lisible par ordinateur stocke un programme informatique, et le programme informatique, lorsqu'il est exécuté par un processeur d'un répondeur de mesure de détection de réseau local sans fil, WLAN, amène le processeur à mettre en œuvre le procédé de communication selon l'une quelconque des revendications 6 à 9.
